# EUROPEAN PATENT APPLICATION

(11) **EP 4 701 012 A1**
(43) Date of publication of application: **25.02.2026**
(21) Application number: 25192320.7
(22) Date of filing: 29.07.2025
(51) Int. Cl.: H02G 3/04, H02G 9/02, F16L 57/00, H02G 1/10, H02G 9/06

(54) **GEAR TYPE CABLE PROTECTION SYSTEM**

(30) Priority: 21.08.2024 US 202463685313 P; 26.08.2024 US 202463687031 P; 05.02.2025 US 202563754194 P; 02.07.2025 US 202519257759
(71) Applicant: Panduit Corp., Tinley Park, Illinois 60487 (US)
(72) Inventor: Rouleau, Rodney G., Tinley Park (US); Baskerville, Steven J., Tinley Park (US); Cheo, Francis C., Tinley Park (US); Cicero, Joseph D., Tinley Park (US); Mize, Noah C., Tinley Park (US); Nelson, Kevin L., Tinley Park (US); Park, Nahee, Tinley Park (US); Shin, Jung Hoon, Tinley Park (US); Sims, Gabriela R., Tinley Park (US); Sun, Jian, Tinley Park (US); Szczyrk, Steven A., Tinley Park (US); Treacy, Mary G., Tinley Park (US)
(74) Representative: Roberts, Gwilym Vaughan

(57) **Abstract**

A cable protection system is provided that includes mating features for enabling efficient and effective assembly around a cable to be protected.

## Description

### CROSS-REFERENCE TO RELATED APPLICATION(S)

This application claims benefit to U.S. Provisional Patent Application No. 63/685,313, filed on August 21, 2024, and U.S. Provisional Patent Application No. 63/687,031, filed on August 26, 2024, and U.S. Provisional Patent Application No. 63/754,194, filed on February 5, 2025, the entirety of all of which are hereby incorporated by reference herein.

### TECHNICAL FIELD

The application relates to a cable protection system having a gear type design and other mating features to provide a more effective and efficient installation assembly process. The cable protection system may be used to protect cables intended for use in harsh environments such as subsea applications.

### BACKGROUND

Offshore energy production has been around for decades and until recently it has been typically related to oil and gas production. However, more recently renewable energy sources are becoming more common and offshore installations are popular in areas where available land may be too expensive or not available. Regardless of the type of offshore installation, power and data transmission are necessary, where cables are used for the transmission of the power and data. The cables used for offshore installations need to be protected from abrasion, sharp objects, kinks, and other environmental issues that may degrade the integrity of the cables. Typically, cable protection systems are known to utilize a segmented bell and ball cast iron system. This style of protective sleeve has proven to be effective at protecting the cables, and are preferable for installations where an assembly machine is being used to automate at least some of the installation process for assembling the bell and ball system along an assembly line. However, the bell and ball cast iron system has several weaknesses such as the cast iron being heavy and requiring fasteners, which results in increased time and resources to install, as well as the cast iron material itself having the limitation of a limited lifespan in salt water and worker safety issues due to its heavy and bulky nature.

### SUMMARY

Disclosed herein are cable protection systems and methods for assembling such cable protection systems. The cable protection systems include features for enabling a more efficient installation process which may include utilizing the cable protection system into an assembly machine that feeds the cable protection system into an assembly line to automate at least part of the overall installation process.

According to some embodiments, a cable protection system including a cable protection sleeve is disclosed, the cable protection sleeve comprising a male end including a first mating feature configured to mate with a second mating feature on a female end of a first adjacent cable protection sleeve, a female end including the second mating feature configured to mate with the first mating feature on a male end of a second adjacent cable protection sleeve, and a main body positioned between the male end and the female end, the main body including walls having trapezoidal shaped tops.

According to some embodiments, a cable protection sleeve is disclosed. The cable protection sleeve comprising a first half sleeve having teeth defining voids therebetween and a plurality of embedded fasteners, the plurality of embedded fasteners configured to couple with fasteners of a second half sleeve such that during coupling the teeth and voids of each half sleeve mate to form a protective sleeve, and wherein the first half sleeve includes a first plurality of reinforcing structures configured to be mated with a second plurality of reinforcing structures of the second half sleeve such that when the first and second half sleeves are coupled together ends of the half sleeves are staggered.

According to some embodiments, a method of assembling a cable protection sleeve is disclosed. The method comprising coupling a female end of a first bottom protective half sleeve with a male end of a second bottom protective half sleeve, and coupling a first top protective half sleeve to the first and second bottom protective half sleeves, wherein the first top protective half sleeve is offset such that ends of the top protective half sleeve do not align with ends of the first or second bottom protective half sleeves.

A detailed description of these and other non-limiting exemplary embodiments of the cable protection system is set forth below together with accompanying drawings.

### BRIEF DESCRIPTION OF THE DRAWINGS

FIG. 1 is a perspective view of a portion of an exemplary cable protection system, according to some embodiments of the present disclosure.
FIG. 2 is a perspective view of a half sleeve of the cable protection system shown in FIG. 1, according to some embodiments of the present disclosure.
FIG. 3A is a partial top-side perspective view of a male end of the half sleeve shown in FIG. 2, according to some embodiments of the present disclosure.
FIG. 3B is a partial bottom-side perspective view of a male end of the half sleeve shown in FIG. 2, according to some embodiments of the present disclosure.
FIG. 4 is a partial perspective view of a female end of the half sleeve shown in FIG. 2, according to some embodiments of the present disclosure.
FIG. 5 is a side view of a half length half sleeve that may be included in the cable protection system shown in FIG. 1, according to some embodiments of the present disclosure.
FIG. 6 is a side view of a portion from a bottom row comprising half sleeves from the cable protection system shown in FIG. 1, according to some embodiments of the present disclosure.
FIG. 7 is a side view showing a partial assembly of the cable protection system shown in FIG. 1, where a top row half sleeve is in a first installation state of an installation process, according to some embodiments of the present disclosure.
FIG. 8 is a side view showing a partial assembly of the cable protection system shown in FIG. 1, where a top row half sleeve is in a second installation state of an installation process, according to some embodiments of the present disclosure.
FIG. 9 is a side view showing a partial assembly of the cable protection system shown in FIG. 1, where a top row half sleeve is in a third installation state of an installation process, according to some embodiments of the present disclosure.
FIG. 10 is a side view showing a partial assembly of the cable protection system shown in FIG. 1, where a top row half sleeve is in a fourth installation state of an installation process, according to some embodiments of the present disclosure.
FIG. 11 is a magnified partial view of a male end to a half sleeve included in an exemplary cable protection system, according to a second embodiment of the present disclosure.
FIG. 12 is a magnified partial view of a female end to the half sleeve of the cable protection system shown in FIG. 11, according to the second embodiment of the present disclosure.
FIG. 13 is a magnified partial view of a female end to a half sleeve included in an exemplary cable protection system, according to a third embodiment of the present disclosure.
FIG. 14 is a perspective view showing a portion of an exemplary cable protection system including coupling fasteners that are embedded into half sleeves that comprise the cable protection system, according to a fourth embodiment of the present disclosure.
FIG. 15 is a perspective view showing a portion of the cable protection system illustrated in FIG. 14, where portions of a sleeve material have been removed for illustrative purposes to illustrate how the embedded coupling fasteners are internally embedded into the half sleeves, according to the fourth embodiment of the present disclosure.
FIG. 16 is a magnified partial view of a male end to a half sleeve included in the cable protection system illustrated in FIG. 14, according to the fourth embodiment of the present disclosure.
FIG. 17 is a magnified partial view of a female end to a half sleeve included in the cable protection system illustrated in FIG. 14, according to the fourth embodiment of the present disclosure.
FIG. 18 is a perspective view of a male coupling fastener included in the cable protection system illustrated in FIG. 14, according to the fourth embodiment of the present disclosure.
FIG. 19 is a perspective view of a female coupling fastener included in the cable protection system illustrated in FIG. 14, according to the fourth embodiment of the present disclosure.
FIG. 20 is a perspective first-side view of the male coupling fastener illustrated in FIG. 18 mated to the female coupling fastener illustrated in FIG. 19, according to the fourth embodiment of the present disclosure.
FIG. 21 is a perspective second-side view of the male coupling fastener illustrated in FIG. 18 mated to the female coupling fastener illustrated in FIG. 19, according to the fourth embodiment of the present disclosure.
FIG. 22. is a side view of the cable protection system illustrated in FIG. 14, according to the fourth embodiment of the present disclosure.
FIG. 23A is a perspective view of an exemplary male coupling fastener, according to a fifth embodiment.
FIG. 23B is a perspective view of an exemplary female coupling fastener, according to the fifth embodiment.
FIG. 24A is a perspective view of a coupling fastener system according to a sixth embodiment.
FIG. 24B is an exploded view of the coupling fastener system according to the sixth embodiment.
FIG. 24C is a perspective view of an exemplary protective casing, according to the sixth embodiment.
FIG. 24D is a perspective view of an exemplary female coupling fastener, according to the sixth embodiment.
FIG. 24E is a perspective view of a protective half sleeve with phantom lines showing the protective casing and female coupling fastener of the sixth embodiment.
FIG. 25 is a partial perspective view of an exemplary protective half sleeve according to a seventh embodiment.
FIG. 26 a perspective view showing a partial assembly of an exemplary cable protection system, according to some embodiments of the present disclosure.
FIG. 27 is a top view of a bottom half sleeve according to the seventh embodiment.
FIG. 28 is a top view of a top half sleeve according to the seventh embodiment.
FIG. 29 is a flow chart illustrating a method assembly.

### DETAILED DESCRIPTION

As required, detailed non-limiting embodiments are disclosed herein. However, it is to be understood that the disclosed embodiments are merely exemplary and may take various and alternative forms. The figures are not necessarily to scale, and features may be exaggerated or minimized to show details of particular components. Therefore, specific structural and functional details disclosed herein are not to be interpreted as limiting, but merely as a representative basis for teaching one skilled in the art.

Disclosed herein are novel cable protection systems and methods for installing such cable protection systems that offer improved installation efficiency and physical attributes over previously known cable protection systems.

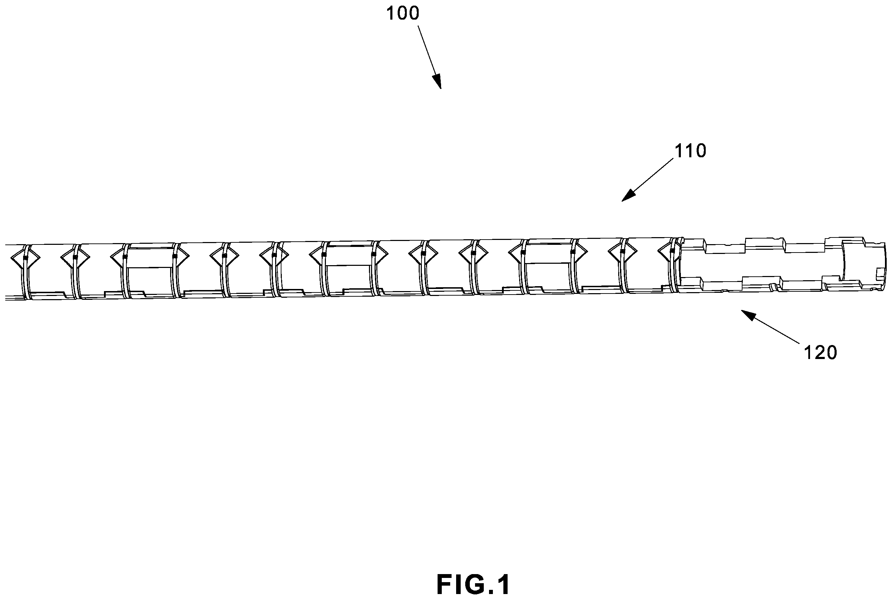

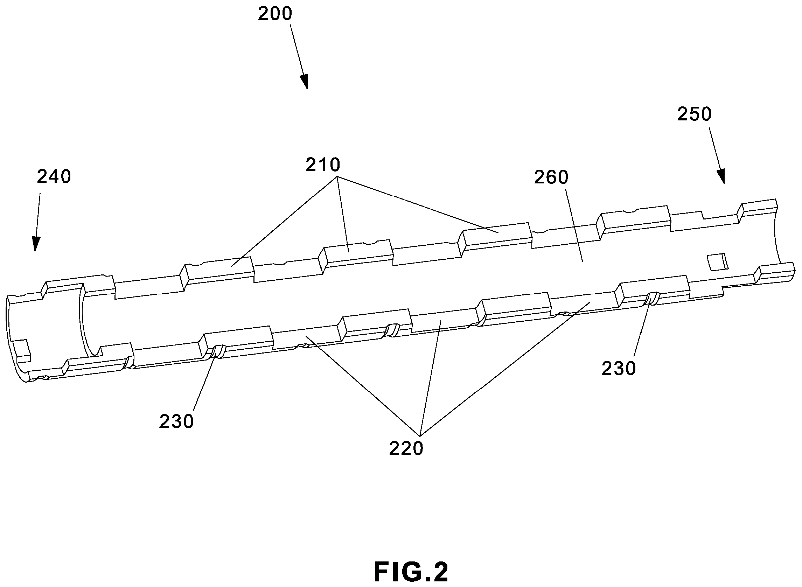

FIG. 1 shows an exemplary cable protection system 100 according to an embodiment of this disclosure. The cable protection system 100 includes a top row 110 of half sleeves 200, and a bottom row 120 of half sleeves 200, where the half sleeves 200 include a gear type structural design for mating together to cover and protect around a cable or other elongated object. According to some embodiments, the cable protection system 100 comprising the half sleeves 200 may be manually assembled to cover and protect an object (e.g., cable) from environmentally challenging locations such as subsea installations. According to other embodiments, the half sleeves 200 may be assembled, at least in part, using a mechanical machine for powering an assembly line with rollers to automate, or at least semi-automate, a process for traveling the half sleeves 200 to cover and protect the cable as it travels along the assembly line, as will be described in more detail below. The half sleeves 200 may be made from a polyurethane, or other similar polymer material. According to some embodiments, portions of the half sleeves 200 may include metal components. For example, metal components may be embedded within certain portions of the half sleeves 200 to provide additional structural stability, and/or increase weight of the half sleeves 200. FIG. 2 shows the half sleeve 200 that may be mated together to form the cable protection system 100. For example, a half sleeve 200 from the top row 110 may be mated with a half sleeve 200 from the bottom row 120 to cover and protect a portion of the cable within an inner housing 260 that is formed when the two half sleeves 200 are mated together.

The half sleeve 200 is configured generally in a half tube shape, with gear shaped protrusions (i.e., teeth) and openings (i.e., voids for receiving corresponding teeth). For example, the half sleeve 200 includes trapezoidal protrusions 210 and trapezoidal openings 220 along the walls. Then a mating process may include the trapezoidal protrusions 210 from a half sleeve 200 in the top row 110 mating with trapezoidal openings 220 from a half sleeve 200 in the bottom row 120, and trapezoidal protrusions 210 from the half sleeve 200 in the bottom row 120 mating with the trapezoidal openings 220 from the half sleeve 200 in the top row 110. The trapezoidal shape of these mating features on the half sleeves 200 are one of the exemplary solutions offered by the cable protection system 100 for enabling faster and more efficient installation. Although the mating features are shown and/or described as having the trapezoidal shape, other interlocking shapes (e.g., rectangular or triangular shapes) may also be utilized for the mating features.

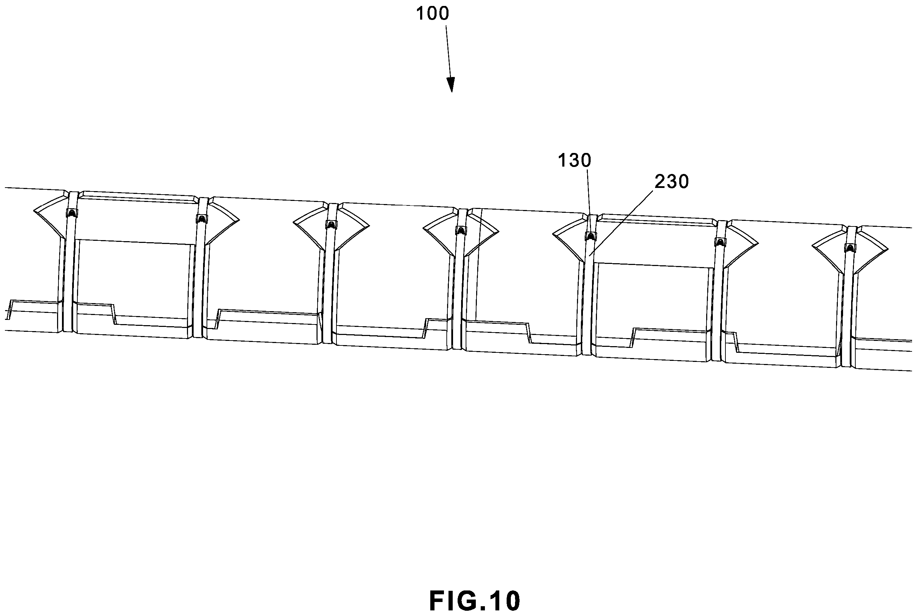

The half sleeve 200 may also include a recessed channel 230 for installing a cable tie or strap 130 over two mated half sleeves 200, as shown in the assembled cable protection system 100 in FIG. 10. The half sleeve 200 also includes a female end 240 and a male end 250 that also include mating features, as will be described in more detail below.

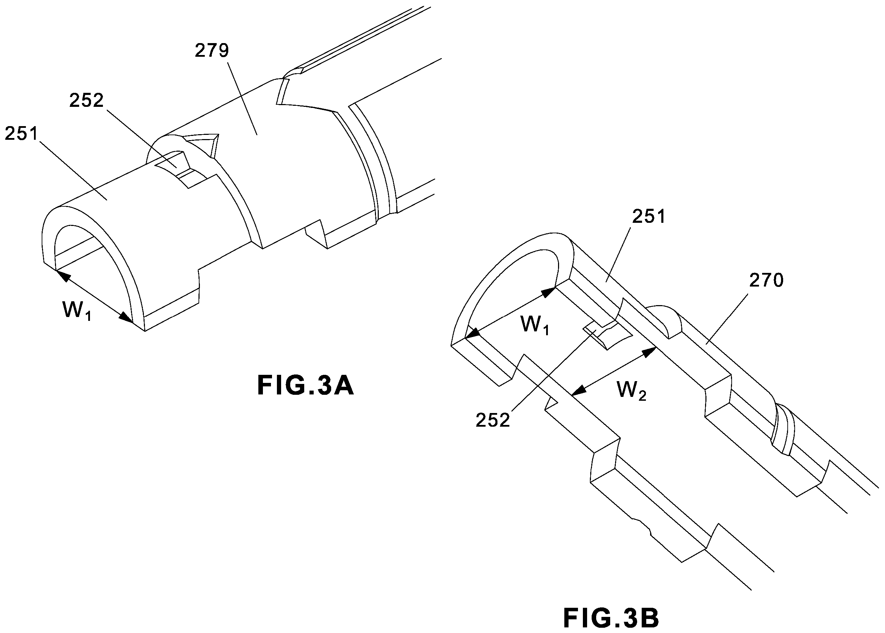

FIGS. 3A-3B show the male end 250 of the half sleeve 200. The male end 250 includes a dovetail body 251 that includes a greater width W₁ at a far end, and a smaller width W₂ at an inner end. The dovetail body 251 is shown to begin at the inner end that drops down shortly (i.e., has a smaller diameter) from an outer shell surface 270 of the half sleeve 200. The shape of the dovetail body 251 is made to mate with a dovetail housing 241 from the female end 240 to provide another solution for providing an effective mating feature, as will be described in more detail below with reference to the female end 240. The male end 250 also includes a thru hole 252 at the inner end of the dovetail body 251. The thru hole 252 is configured to receive a hook 242 included in the female end 240, as will be described in more detail below with reference to the female end 240.

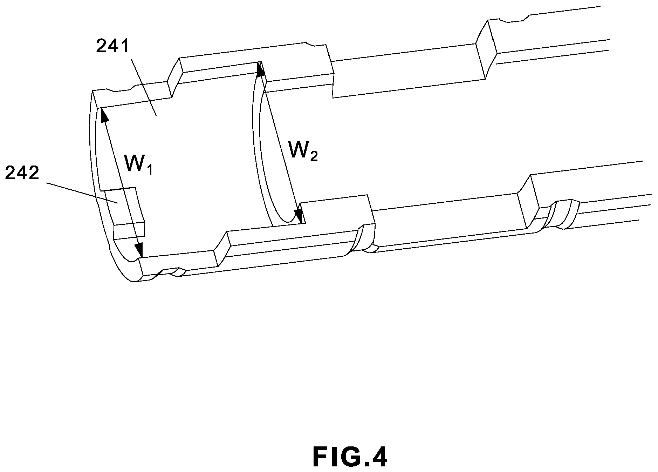

FIG. 4 shows an underside of the female end 240 of the half sleeve 200. The female end 240 is configured to mate with the male end 250 by having the female end 240 drop on top of the male end 250 when mating two consecutive/adjacent half sleeves 200 together when assembling the cable protection system 100. When the female end 240 drops on top of the male end 250, the hook 242 is configured to drop into the thru hole 252 of the male end 250. The hook 242 dropping into the thru hole 252 will provide a secure mating strength to aid in preventing the two connected half sleeves 200 from pulling apart. In addition, the female end 240 includes the dovetail housing 241 that includes the same tapered shape as the dovetail body 251 from the male end 250, so that when the dovetail housing 241 falls down to cover over the dovetail body 251, a dovetail joint is formed to further aid in preventing the two connected half sleeves 200 from pulling apart.

In various embodiments, a half sleeve having a smaller length may be used such as at the beginning of assembly to provide an offset between the abutting ends of the bottom row and the abutting ends of the top row. For example, each terminal end of the cable protection system 100 may include a half sleeve that is half the length of the other half sleeves to accommodate the staggered alignment.

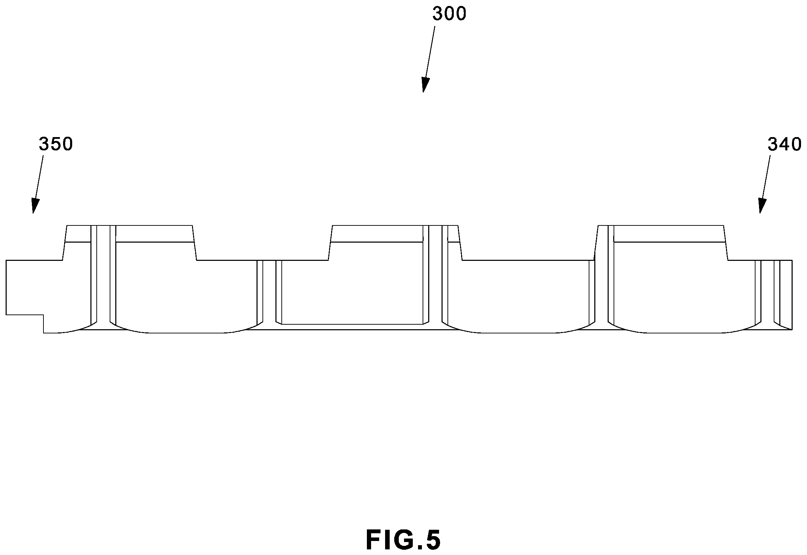

FIG. 5 shows a half length half sleeve 300 that may be installed at the beginning of an assembly process to one of the top row 110 or the bottom row 120 to ensure an offset of at least a half length of the half sleeve 200. Imparting this offset will provide further stability over the cable protection system 100 as it is being assembled around the cable. The half length half sleeve 300 also includes a male end 350 and a female end 340 with the same mating features as described for the full length half sleeve 200. In other words, the half length half sleeve is half the length of the half sleeve 200 (i.e., the half sleeve 200 is double the length of the half length half sleeve). In various embodiments, the top and bottom half sleeves are offset when assembled and/or fastened together such that abutting ends of the top and bottom are staggered instead of aligned. This may create greater uniformity along the length of the cable protection system 100. The gear shape and/or staggered arrangement may strengthen, eliminate, and/or reduce weak points. For example, the cable protection system 100 may have a more uniform strength along its length. Additional strengthening at abutted ends is common with typical systems especially where the abutted edge traverses the entire diameter of the sleeve. However, additional strengthening at abutted ends for the system disclosed herein may not be necessary. The staggered/offset arrangement may permit equally/uniformly spaced fasteners along the length of the sleeve which provides stability and eliminates/reduces weak spots.

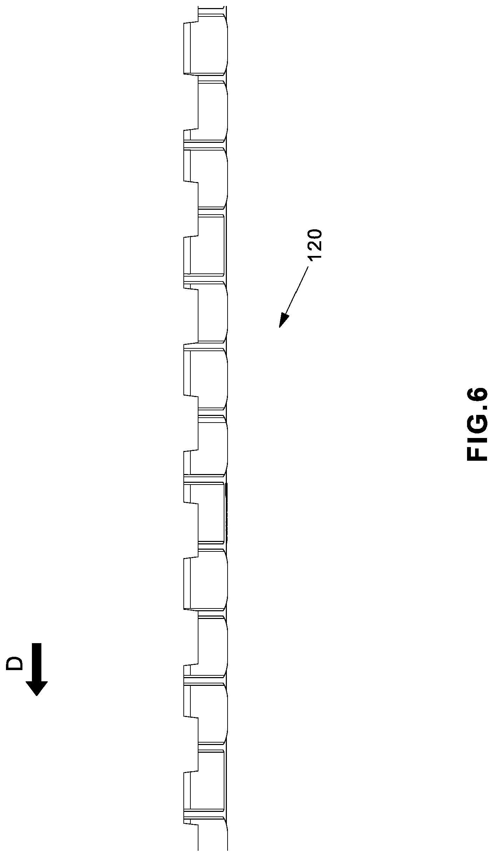

FIG. 6 shows a length of half sleeves 200 that have been connected together to form a portion of the bottom row 120. Forming this initial portion of the bottom row 120 will be used to initiate an assembly of the cable protection system 100, according to some embodiments. Although not illustrated, a cable may be placed into the inner housing 260 of the half sleeves 200 that are connected in the bottom row 120 to initiate the assembly process.

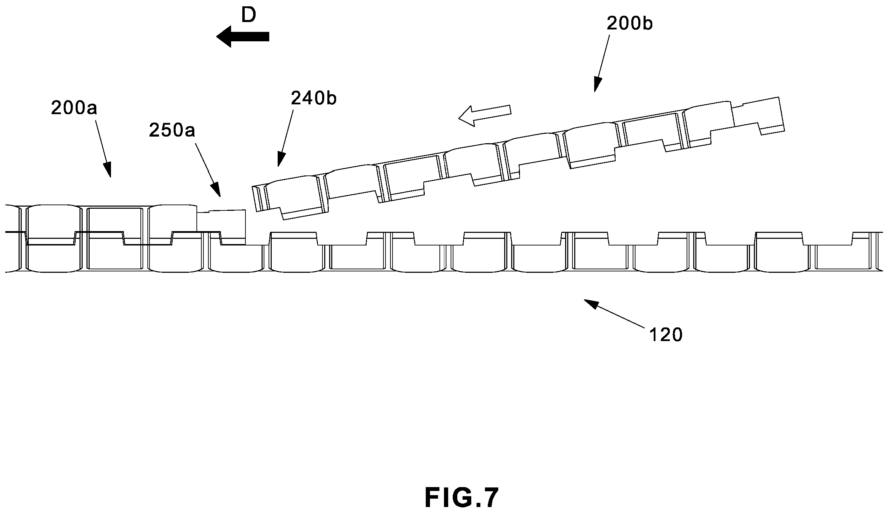

FIG. 7 shows an exemplary subsequent step in the assembly process for the cable protection system 100, where a first half sleeve 200a has been mated with the bottom row 120, and a second half sleeve 200b is being laid down to be connected to the first half sleeve 200a. The female end 240b from the second half sleeve 200b will be positioned to be laid on top of the male end 250a from the first half sleeve 200a.

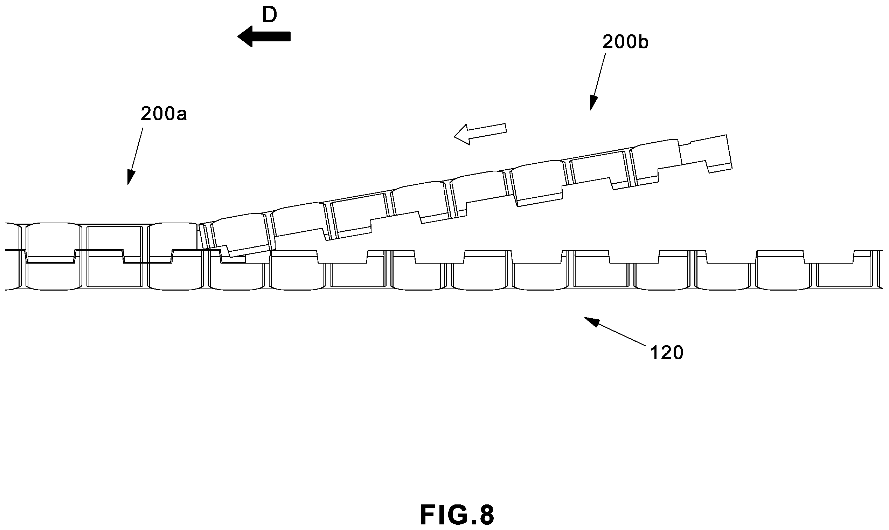

FIG. 8 shows an exemplary subsequent step in the assembly process for the cable protection system 100, where the female end 240b from the second half sleeve 200b is now positioned over the top of the male end 250a from the first half sleeve 200a.

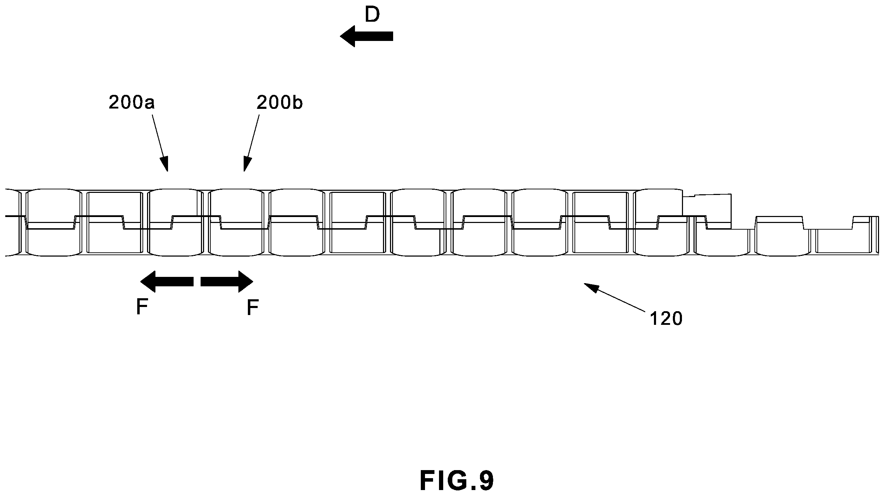

FIG. 9 shows an exemplary subsequent step in the assembly process for the cable protection system 100, where the female end 240b from the second half sleeve 200b is now installed over the top of the male end 250a from the first half sleeve 200a. In this installed position, the hook 242 from the female end 240b of the second half sleeve 200b has dropped into the thru hole 252 of the male end 250a of the first half sleeve 200a, to secure a mating hold that will prevent the first half sleeve 200a and the second half sleeve 200b from being pulled apart by forces F-F'. In this installed position, the dovetail housing 241 from the female end 240b of the second half sleeve 200b has fallen down to cover over the dovetail body 251 of the male end 250a of the first half sleeve 200a, so that a dovetail joint is formed to further aid in preventing the first half sleeve 200a and the second half sleeve 200b from being pulled apart by forces F-F'.

FIG. 10 shows a portion of the cable protection system 100 in a final assembly state where a cable tie or strap 130 has been installed around a circumference of the mated half sleeves from the top row 110 and the bottom row 120. The cable tie or strap 130 helps to prevent the mated half sleeves from the top row 110 and the bottom row 120 from pulling apart from each other. The assembly steps shown in FIGS. 6-10 may be implemented on a machine device that includes an assembly line for moving the half sleeves 200 in the direction D, to automate at least a part of the assembly process. It follows that the cable protection system 100, and the method for assembly of the cable protection system 100, provides an efficient and effective solution for installing such a cable protection system 100 to protect over cabling.

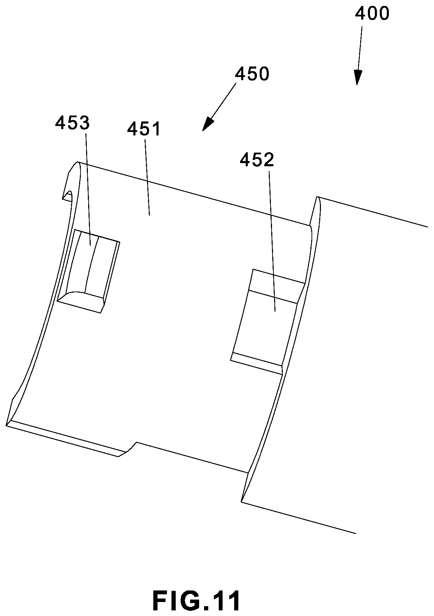

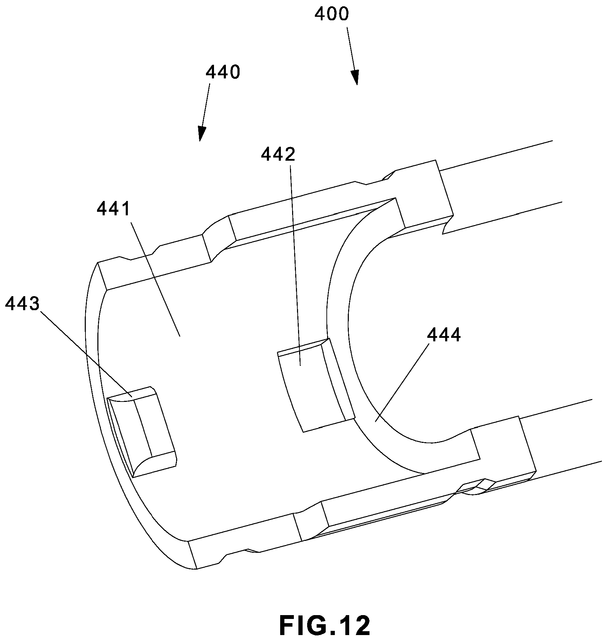

FIGS. 11 and 12 show an alternative second embodiment of a half sleeve 400 that includes different mating features on a male end 450 as well as a corresponding female end 440. FIG. 11 shows a top-down view of the male end 450, where the male end 450 includes a male body 451. The male body 451 includes both a hook 453 and a thru hole 452. According to this alternative embodiment, the hook 453 may be a chamfered shaped protrusion positioned at a far end of the male body 451, while the thru hole 452 is positioned at an inner end of the male body 451 closest to the main body of the half sleeve 400.

FIG. 12 shows an underside of a female body 441 comprising the female end 440, where the underside of the female body 441 includes a hook 443 and a thru hole 442. According to this alternative embodiment, the hook 443 may be a chamfered shaped protrusion positioned at a far end of the female body 441, while the thru hole 442 is positioned at an inner end of the female body 441 closest to the main body of the half sleeve 400. The female end 440 also includes a beveled face 444. The assembly process is the same as for the previously described half sleeve 200. Namely, the female end 440 of a first half sleeve 400 is configured to fall down on top of a male end 450 of a second half sleeve 400 to mate the first and second half sleeves 400 together. To form the mating connection, the hook 443 from the female end 440 is configured to fall down into the thru hole 452 of the male end 450, and the hook 453 from the male end 450 is configured to fit up into the thru hole 442 of the female end 440 when the female end 440 falls down on top of the male end 450 during the described assembly process.

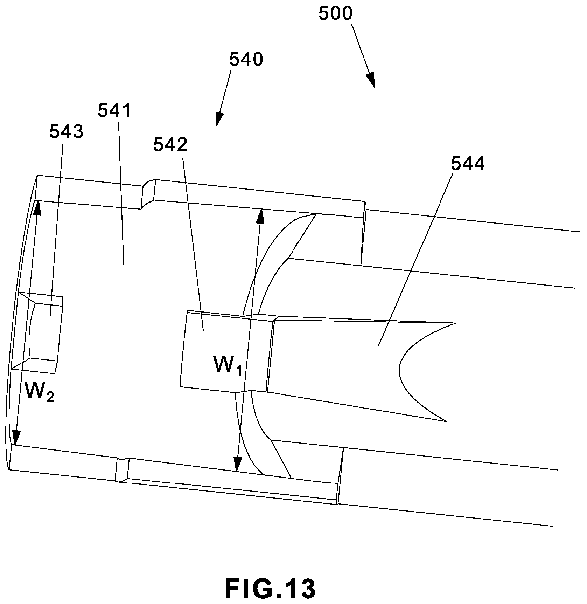

According to another alternative third embodiment, the half sleeve 400 may be further modified to add the dovetail shapes to the male body 451 and the corresponding female body 441. Such an alternative embodiment is exemplified by the half sleeve 500 shown in FIG. 13, where the female end 540 includes the same hook 543, 443 and thru hole 542, 442 as provided in the female end 440 of the half sleeve 400. However, the female end 540 from the half sleeve 500 additionally includes a female body 541 that is configured in the dovetail shape having a smaller width W₂ at a first end than a width W₁ at an opposite second end. In addition, the female end 540 also includes a hook guidance chute 544 to guide the hook 453 from the male end 450 into the thru hole 442 of the female end 440. A similar guidance chute may be included on a surface of the male end 450 for guiding the hook 443 from the female end 440 into the thru hole 452 on the male end 450.

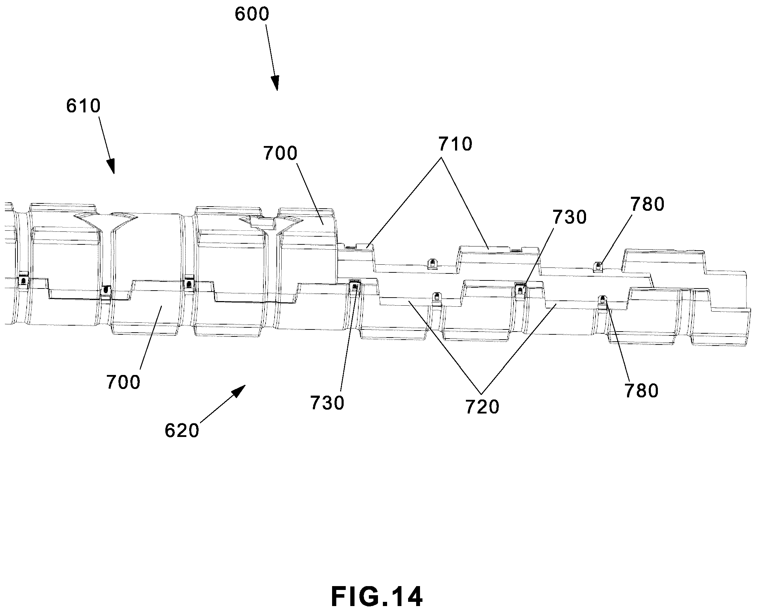

FIG. 14 shows an exemplary cable protection system 600 comprising a top row 610 of protective half sleeves 700 mated to a bottom row 620 of protective half sleeves 700, according to an alternative fourth embodiment. The half sleeves 700 used in the cable protection system 600 have been modified from previous embodiments described above by now including embedded coupling fasteners 730, 780. Otherwise, the composition and design of the half sleeves 700 are the same, or at least substantially similar, to the half sleeves 200, 400, 500 described above. For example, the half sleeves 700 also include gear shaped protrusions and openings, such as the trapezoidal openings 720 and trapezoidal protrusions 710, same as the trapezoidal openings 220 and trapezoidal protrusions 210 of the half sleeves 200.

The half sleeves 700 include an embedded male coupling fastener 780 along a portion of the trapezoidal openings 720, and include an embedded female coupling fastener 730 along a portion of the trapezoidal protrusions 710. With this configuration, the male coupling fastener 780 may be coupled to fit into the female coupling fastener 730 as a top row half sleeves 700 is mated to a bottom row half sleeve 700 during an installation process. The installation process for the half sleeves 700 relating to the trapezoidal protrusions 710 fitting into the trapezoidal openings 720 may be the same, or at least substantially similar, to the installation processes described with reference to the trapezoidal protrusions 210 fitting into the trapezoidal openings 220 of the half sleeves 200 described according to the other embodiments herein.

In one or more embodiments, the fasteners such as the embedded fasteners 730, 780 are askew. In other words, the fasteners may be embedded such that they are not centrally located within each trapezoidal protrusion/opening 710/720. For example, the fasteners 730, 780 may be shifted towards the female end or the male end relative to the center of the corresponding trapezoidal protrusions/openings 710/720. In various embodiments, the male end may be free of fasteners. Embedding the fasteners 730, 780 may facilitate faster assembly and/or increase the ease of installation as tools or additional components for assembly are not necessary.

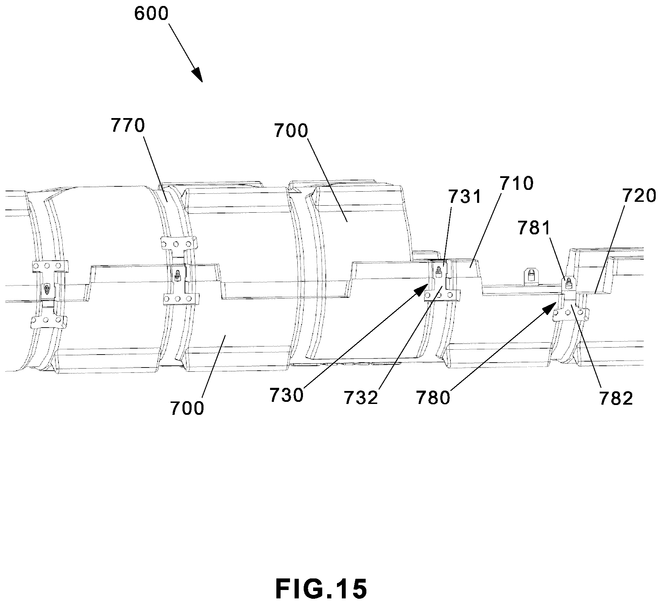

FIG. 15 shows a more magnified view of the cable protection system 600 with portions of the sleeve material being removed to provide a view into how the embedded coupling fasteners 730, 780 are embedded into the half sleeves 700. The female coupling fastener 730 includes an exposed portion 731 that remains exposed out from the half sleeve 700, and the female coupling fastener 730 includes an embedded portion 732 that is embedded within the half sleeve 700 by having the material molded around the embedded portion 732. Similarly, the male coupling fastener 780 includes an exposed portion 781 that remains exposed out from the half sleeve 700, and the male coupling fastener 780 includes an embedded portion 782 that is embedded within the half sleeve 700 by having the material molded around the embedded portion 782.

In one or more embodiments, the fastening assembly 700 includes a first component 730 and a second component 780 configured to be couple with the first component 730. In a refinement, each component 730, 780 include an anchoring portion (e.g., retention end) and a coupling portion (e.g., exposed portion 781). The anchoring portion may be shaped to anchor or secure the fastening component 730, 780 to a corresponding half sleeve 700. In one or more embodiments, the anchoring portion may be embedded in the corresponding half sleeve 700, for example, by molding the half sleeve around the anchoring portion. The anchoring portion may be embedded in a wall of the half sleeve 700 such that the anchoring portion is disposed in an inner portion of the wall and the coupling portion projects from the sleeve or wall thereof and is thus exposed when not coupled.

In various embodiments, the anchoring portion may also define one or more (e.g., a plurality of, or at least three) retention holes 734, 784. In various embodiments, the anchoring portions may be the same or different shapes and sizes. For example, the first and second components 730, 780 may each or both have a bifurcated shape such as a T-shape or cross shape where the anchoring portion is joined with the coupling portion to form the bifurcated shape.

In various embodiments, the first component 730 may be shaped for coupling with the second component 780. For example, the second component 780 may fit within the first component 730. The first component 730 may be a female component and the second component 780 may be a male component sized/shaped to be inserted into the female component.

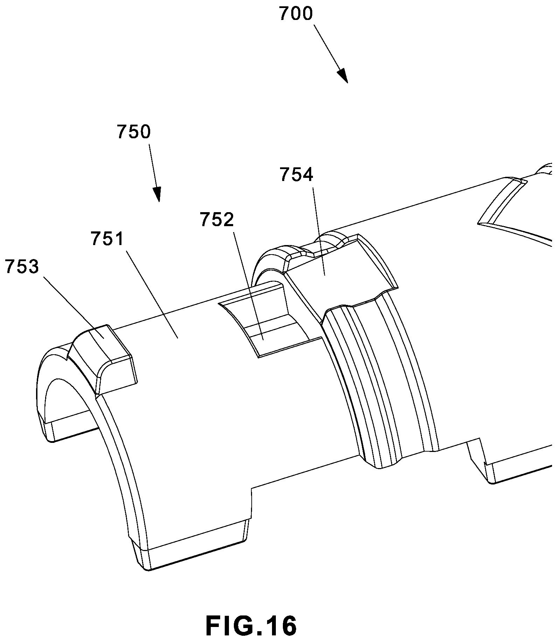

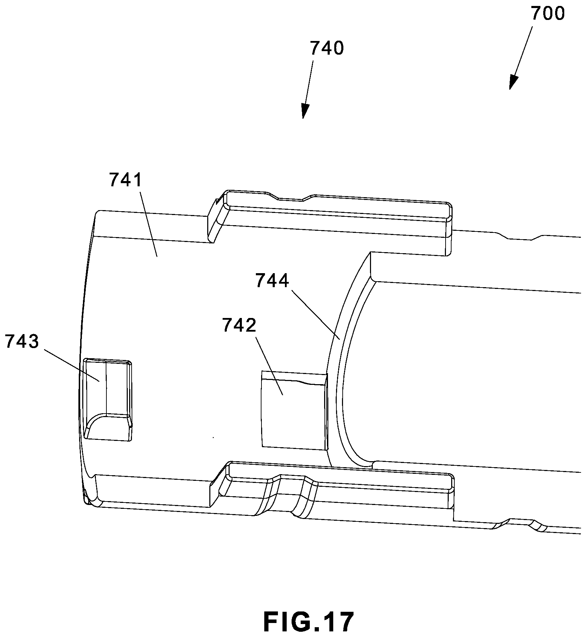

Furthermore, the half sleeves 700 include a male end 750 and a female end 740 as shown in FIGS. 16 and 17, respectively. The male end 750 includes a male body 751, where the male body 751 includes both a hook 753 and a thru hole 752. The hook 753 may be a chamfered shaped protrusion positioned at a far end of the male body 751, while the thru hole 752 is positioned at an inner end of the male body 751 closest to the main body of the half sleeve 700. The male end 750 also includes a ramp 754 which may be used to guide a hook 763 found on the female end 760 into the thru hole 752, as will be described in more detail below. The male end 750 also includes a channel 770 adjacent to the male body 751, where a tie or strap may be installed around the half sleeve 700 within the channel 770. The channel 770 is shown to be adjacent to the male body 751, with additional channels being placed along a length of the half sleeves 700.

According to some embodiments the male body 751 may have straight cylindrical side walls as illustrated in FIG. 16, or according to some alternative embodiments the male body 751 may have a tapered dovetail shape as described for the male body 451 of the male end 450 included in the half sleeve 400.

FIG. 17 shows an underside of a female body 741 comprising the female end 740, where the underside of the female body 741 includes a hook 743 and a thru hole 742. According to this alternative embodiment, the hook 743 may be a chamfered shaped protrusion positioned at a far end of the female body 741, while the thru hole 742 is positioned at an inner end of the female body 741 closest to the main body of the half sleeve 700. The female end 740 may also include a beveled face 744. The assembly process may be the same as for the previously described half sleeve 400. Namely, the female end 740 of a first half sleeve 700 is configured to fall down on top of a male end 750 of a second half sleeve 700 to mate the first and second half sleeves 700 together. To form the mating connection, the hook 743 from the female end 740 is configured to fall down into the thru hole 742 of the male end 750, and the hook 753 from the male end 750 is configured to fit up into the thru hole 742 of the female end 740 when the female end 740 falls down on top of the male end 750 during the described assembly process.

According to some embodiments the female body 741 may have straight cylindrical side walls as illustrated in FIG. 17, or according to some alternative embodiments the female body 741 may have a tapered dovetail shape as described for the female body 441 of the female end 440 included in the half sleeve 400.

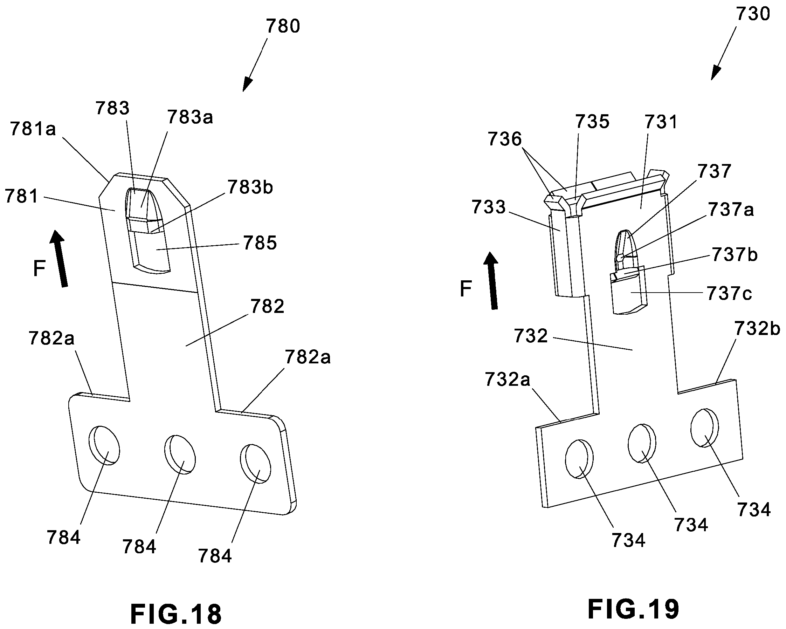

FIG. 18 shows a perspective view of the male coupling fastener 780 alone. The exposed portion 781 includes a latch 783 and a latch window 785. The latch 783 may include a ramped conical shape 783a, and also includes a latching edge 783b. An end 781a to the exposed portion 781 may include an inward tapered shape. The embedded portion 782 may include a winged flange shape that includes a first retention surface 782a and a second retention surface 782b. The first retention surface 782a and the second retention surface 782b provide additional retention force that aids in preventing the male coupling fastener 780 from being pulled out from an upward force F when the male coupling fastener 780 is embedded within the molded material of the half sleeves 700. The winged flange shape also enables the inclusion of a plurality of retention holes 784. The retention holes 784 allow for the material of the half sleeves 700 to flow through and be molded in place to provide a retention hold for keeping the male coupling fastener 780 embedded within the half sleeves 700 by working against the upward force F when the male coupling fastener 780 is embedded within the molded material of the half sleeves 700.

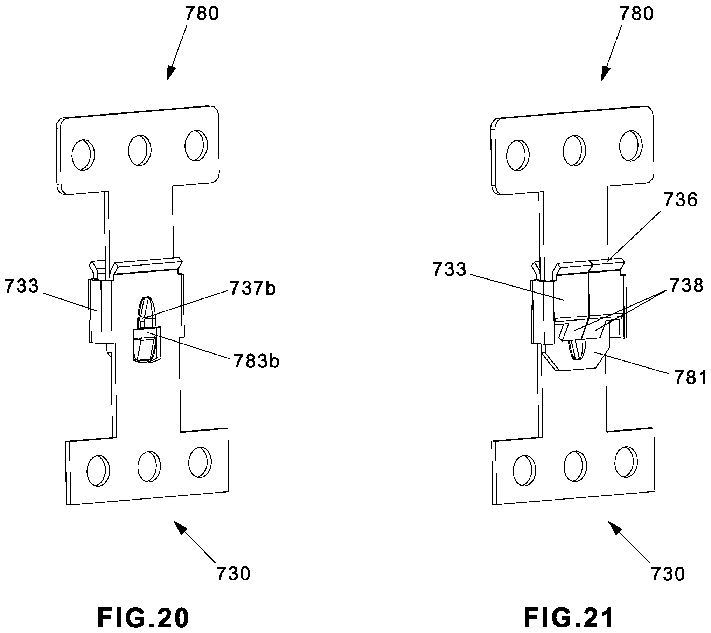

FIG. 19 shows a perspective view of the female coupling fastener 730 alone. The exposed portion 731 includes a chamber 733, a latch 737, and a latch window 737c. The latch 737 may include a ramped conical shape 737a, and a latch edge 737b. The chamber 733 includes a top opening 735, where the end 781a of the exposed portion 781 to the male coupling fastener 780 is configured to fit down into the top opening 735. Lead in flanges 736 may surround the top opening 735 to better guide the end 781a into the top opening 735. On an opposite side to the chamber 733, as shown in FIG. 21, the chamber 733 further includes at least one retention tab(s) 738.

The embedded portion 732 may include a winged flange shape that includes a first retention surface 732a and a second retention surface 732b. The first retention surface 732a and the second retention surface 732b provide additional retention force that aids in preventing the female coupling fastener 730 from being pulled out from an upward force F when the female coupling fastener 730 is embedded within the molded material of the half sleeves 700. The winged flange shape also enables the inclusion of a plurality of retention holes 734. The retention holes 734 allow for the material of the half sleeves 700 to flow through and be molded in place to provide a retention hold for keeping the female coupling fastener 730 embedded within the half sleeves 700 by working against the upward force F when the female coupling fastener 730 is embedded within the molded material of the half sleeves 700.

FIG. 20 shows a perspective view, taken from a first side, of the male coupling fastener 780 inserted into the female coupling fastener 730 according to an installed state. In this installed state, the end 781a of the male coupling fastener 780 is inserted down into the chamber 733 until the latching edge 783b slides over the edge 737b to form a locking mechanism that mates the male coupling fastener 780 to the female coupling fastener 730. FIG. 21 shows a perspective view, taken from a second side, of the male coupling fastener 780 inserted into the female coupling fastener 730 according to the installed state. From this view of the second side, the retention tabs 738 are shown to push against the end 781a of the male coupling fastener 780, to further enhance the locking mechanism between the male coupling fastener 780 and the female coupling fastener 730.

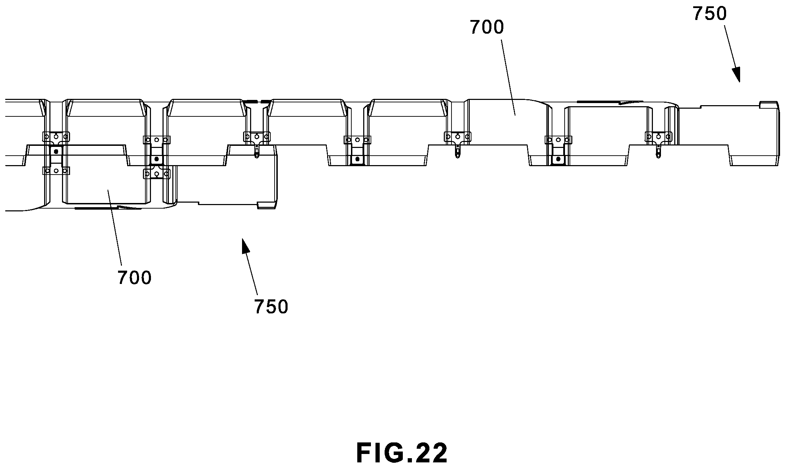

FIG. 22 shows a side view of a portion of the cable protection system 600 where a top row half sleeve 700 is mated to a bottom row half sleeve 700. The portion of the cable protection system 600 shown in FIG. 22 also shows a male end 750 to the half sleeves 700.

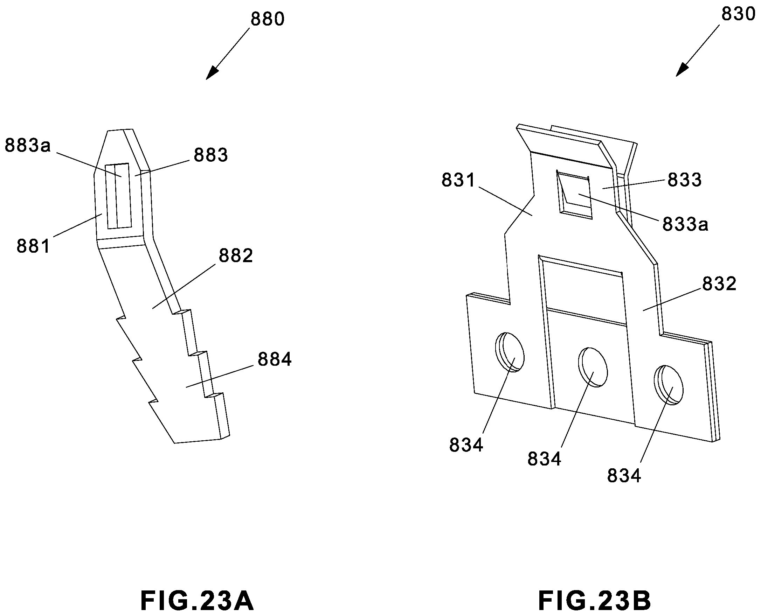

FIG. 23A shows a perspective view of a male coupling fastener 880, according to an alternative fifth embodiment. The male coupling fastener 880 may be embedded into any of the half sleeves 200, 400, 500, 700 described herein. The male coupling fastener 880 includes a retention end 884 that includes a plurality of barb shapes, where the retention end 884 is part of an embedded portion 882. The male coupling fastener 880 also includes a latching end 883 that includes a cutout 883a that is part of an exposed portion 881.

FIG. 23B shows a perspective view of a female coupling fastener 830, according to this fifth embodiment. The female coupling fastener 830 may be embedded into any of the half sleeves 200, 400, 500, 700 described herein. The female coupling fastener 830 includes a latching end 833 that includes a latch 833a, where the latching end 833 is part of an exposed portion 831. The female coupling fastener 830 also includes a plurality of retention holes 834 that are part of an anchoring/embedded portion 832 (e.g., retention end). The latching end 883 is configured to push down into the latching end 833 until the cutout 883a is pushed past the latch 833a, thus forming a mating lock between the male coupling fastener 880 and the female coupling fastener 830.

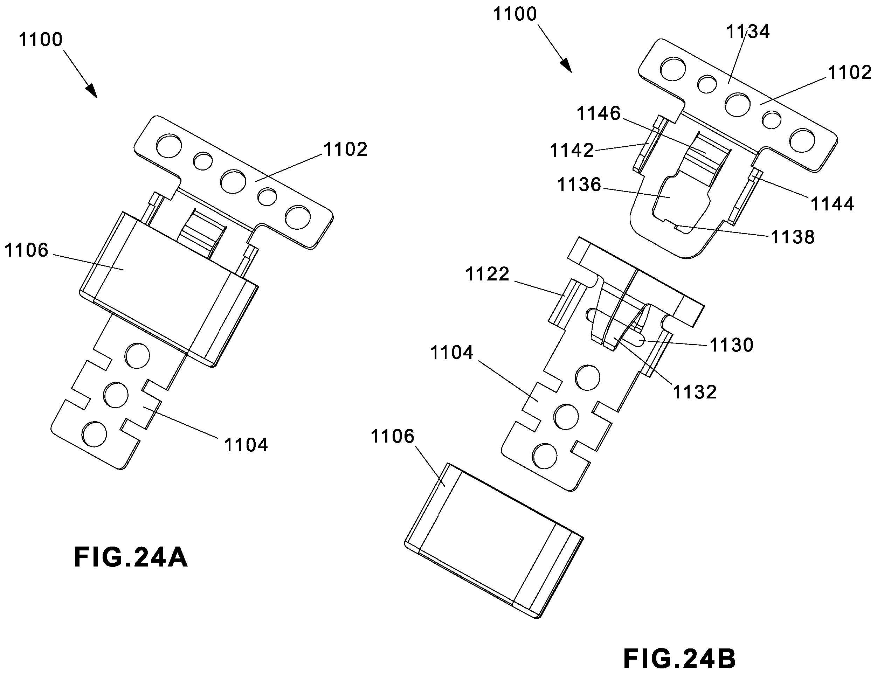

Referring to FIGS. 24A-24B, a fastening assembly 1100 includes a first male component 1102, a second female component 1104, and a protective casing 1106 are provided according to an alternative sixth embodiment. In one or more embodiments, the protective casing 1106 may ensure the coupling portion 1126 of the female component 1104 is not disturbed or inhibited during the manufacturing process such as during molding of the half sleeve 1110 and/or embedding of the fastener components 1102, 1104. For example, the protective case 1106 may stop ingress of molten and/or flowable resin/polymer/plastic during manufacture. In various embodiments, the protective casing 1106 may encase the female component 1104 during manufacturing. For example, the protective casing 1106 may include a base wall 1107 and/or a peripheral wall 1108 that define a cavity. The coupling portion 1126 may reside in the cavity such that the casing 1106 inhibits or stops the flow of material into the cavity during manufacturing.

In a refinement, the peripheral wall 1108 may extend from the peripheral area (e.g., perimeter) of the base wall 1107. In various embodiments, the base wall 1107 and peripheral wall 1108 may cooperate to form a cup-shaped encasing. The protective casing 1106 may remain part of the fastening assembly 1100 and be at least partially embedded in the half-sleeve 1110. The protective casing may be suitable with other fastening assemblies provided herein and is not particularly limited to specific fastening assembly shown.

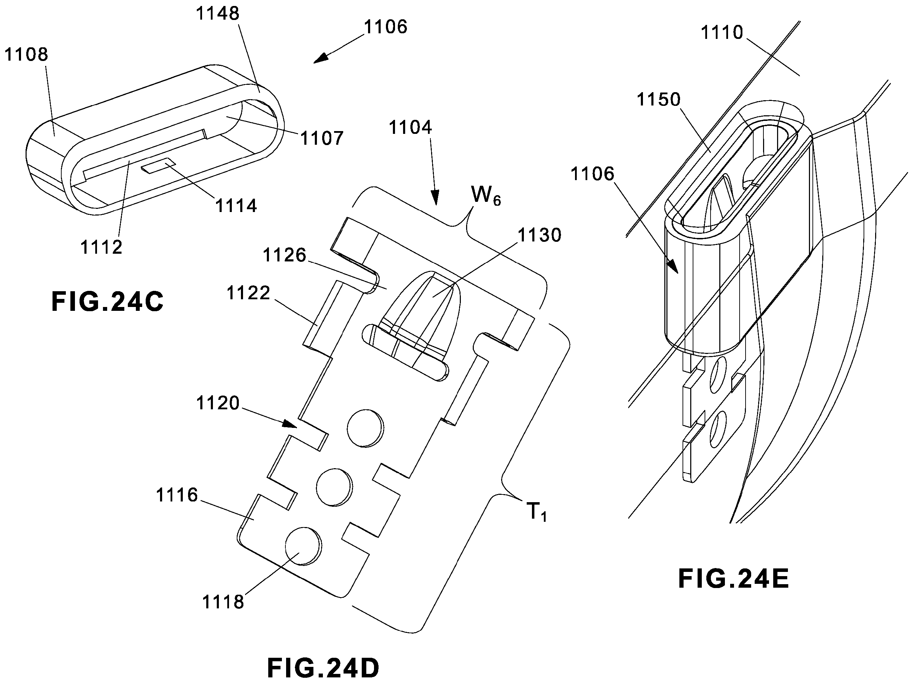

Referring to FIG. 24C, the protective casing 1106 may include one or more (e.g., a plurality or at least two) retaining elements. For example, the protective casing 1106 (e.g., base wall 1107 and/or peripheral wall 1108) may define a slot 1112. In one or more embodiments, a first component such as the female component 1104 may extend through the slot 1112 of the protective casing 1106 such that the anchoring portion 1116 is disposed outside the cavity while the coupling portion 1126 is disposed within the cavity. In various embodiments, the protective casing 1106 (e.g., base wall 1107 and/or peripheral wall 1108) cooperate with the first component 1104 to provide a closed end.

For example, the slot 1112 may be sized such that the slot 1106 is only minimally larger than the fastener component 1104 to stop the ingress of flowable material between the first component 1104 and the protective casing 1106. In a variation, the first component 1104 may cooperate with the protective casing 1106 to seal the slot 1112 such that flowable, for example, resin does not enter the cavity during manufacturing of the half sleeve 1110.

In other words, the fastener component 1104 may be sized to contact the perimeter of the slot 1112 when inserted through the slot 1112. Further, it should be understood that the fastener component 1104 disposed in the slot 1112/cavity is not solely limited to the being the female component 1104 and may alternatively be the male component 102. Thus, when disposed in the protective casing 1106 the fastener component 1104 may cooperate with the protective casing 1106 to form a closed end embedded in the protective half sleeve 1110 and an exposed open end for receiving the second fastener component 1102.

In various embodiments, the protective casing 1106 may include an additional or alternative retaining element 1114. The additional or alternative retaining element 1114 may cooperate with the first component 1104 to couple the protective casing 1106 and the fastener component 1104 together. For example, the retaining element 1114 may be a protrusion or hook. In one or more embodiments, the retaining element 1114 may include a lip to cooperate (e.g., retain) a corresponding element of the fastener 1104 (e.g., depression sized to receive the protrusion/hook or a corresponding protrusion/hook; the retainer ramp 1114 latches into the 1130 cutout/hole). In various embodiments, a surface may extend from the peripheral wall 1108 to form a ramp to the lip of the retaining element 1114. The thinner region of the ramp may be located more proximate the open end and the thicker region of the ramp may be located more proximate the closed end such that the ramped surface eases the insertion of the fastener component 1104 into the protective casing 1106. Once in alignment the corresponding retaining feature of the fastener component 1104 cooperates with the retaining element 1114 of the protective casing 1106 to couple the two together.

In a variation, the protective casing 1106 may include a sealing edge 1148. In a refinement, the sealing edge 1148 may be tapered. For example, the sealing edge 148 may taper outward as it becomes more proximate the open end of the protective casing 1106. In one or more embodiments, the sealing edge 1148 may cooperate with a guide 1150. The guide 1150 may also be tapered outwardly similar to the sealing edge 1148. The guide 1150 may guide or direct the second component 1102 into the protective casing 1106 and to the first component 1104.

Referring to FIG. 24D, a longitudinal or axial anchor 1116 that extends the length L₁ of the component 1104 may be particularly suitable for use with a slotted protective casing 1106. In various embodiments, the longitudinal or axial anchor 1116 does not increase the width W₆ of the first component. Anchoring portions that extend laterally along the length of the sleeve may be less suitable as they may not easily be translated through the slot 1112. In other words, the slot 1112 may be sized to receive the anchoring portion 1116. In various embodiments, the anchoring portion 1116 may define one or more (e.g., a plurality of, at least two, or at least three) anchoring orifices 1118 and/or one or more (*e.g.,* a plurality of, at least two, at least three, at least four) anchoring notches 1120 that produce a rectangular saw-tooth shape. The anchoring orifices 1118 and anchoring notches 1120 may improve pullout strength. Extending the length of the anchoring portion 1116 may also improve pullout strength. For example, the length of the anchoring portion 1116 may be greater than the length of the coupling portion 1126, or double the length of the coupling portion 1126, or even three times the length of the coupling portion 1126.

In one or more embodiments, the first component 1104 is a female component and the second component 1102 is a male component. Each component 1104, 1102 may include a coupling portion and the coupling portions may cooperate with each other to couple the first and second components 1104, 1102. The coupling portion 1126 may include a collar 1128, as shown in FIG. 24B. The collar 1128 may be sized to receive the male component 1102 and/or to fit within the protecting casing 1106, as shown in FIG. 24E.

In a refinement, the coupling portion 1126 may also include one or more (e.g., a plurality of or at least two) positioning springs 1132. The one or more positioning springs 1132 may assist in positioning/guiding the male component 1102 for coupling with the female component 1104. For example, the positioning springs 1132 may restrict translation of the male component 1102 such that it is not inserted too far. The one or more positioning springs 1132 may extend from the collar 1128 towards the anchoring portion 1116.

In a variation, the coupling portion 1126 may also include one or more (*e.g.,* a plurality of or at least two) reinforcing structures such as stiffeners (e.g., reinforcing ribs 1122). For example, stiffeners (e.g., reinforcing ribs 1122) may be disposed on opposite sides of one or more (*e.g.,* a plurality or at least two) latches 1130. In other words, each latch 1130 may be disposed between a plurality of reinforcing structures. For example, the female component 1104 may include one or more (*e.g.,* a plurality of or at least two) latches. The latches may provide a coupling mechanism as described herein and/or resist separation. The stiffeners/reinforcing structures 1122 may provide additional rigidity to improve coupling and/or holding strength.

In one or more embodiments, the male component 1102 includes an anchoring portion 1134, which may be different from the anchoring portion 1116 of the female component 1104. Alternatively, the anchoring portions 1134 and 1116 may be the same as shown, for example, in FIGS. 23A-23B. In various embodiments, the male component 1102 defines a coupling window 1136. The coupling window 1136 may be sized to receive at least one of the latches 1130. In a refinement, an edge defining the coupling window 1136 may include tab 1138 extending into the coupling window 1136. The tab 1138 may extend towards the anchoring portion 1134 and/or be positioned to contact a latching edge of the latch. The tab 1138 may improve strength/retention as the tab 1138 may more securely retain the latching edge.

In a refinement, the male component 1102 may also include reinforcing structures such as stiffeners (e.g., ribs 1142) and/or one or more ears 1144. The reinforcing structures 1142 may improve rigidity and/or cooperate with the reinforcing structure 1122 of the female component 1104 to provide stronger coupling. The one or more ears 1144 may assist or guide positioning of the male component 1102 for coupling. For example, the ears 1144 may stop translation or insertion of the male component 1102 into the female component 1104 so that the male component 1102 is not inserted too far and proper coupling is achieved. In numerous embodiments, the male component 1102 may also include a living hinge 1146 to further secure and strengthen coupling. The living hinge 1146 may extend into the collar 1128 when the male component 1102 is inserted into the female component 1104 and may contact the latch to more securely stabilize the coupled latch 1130.

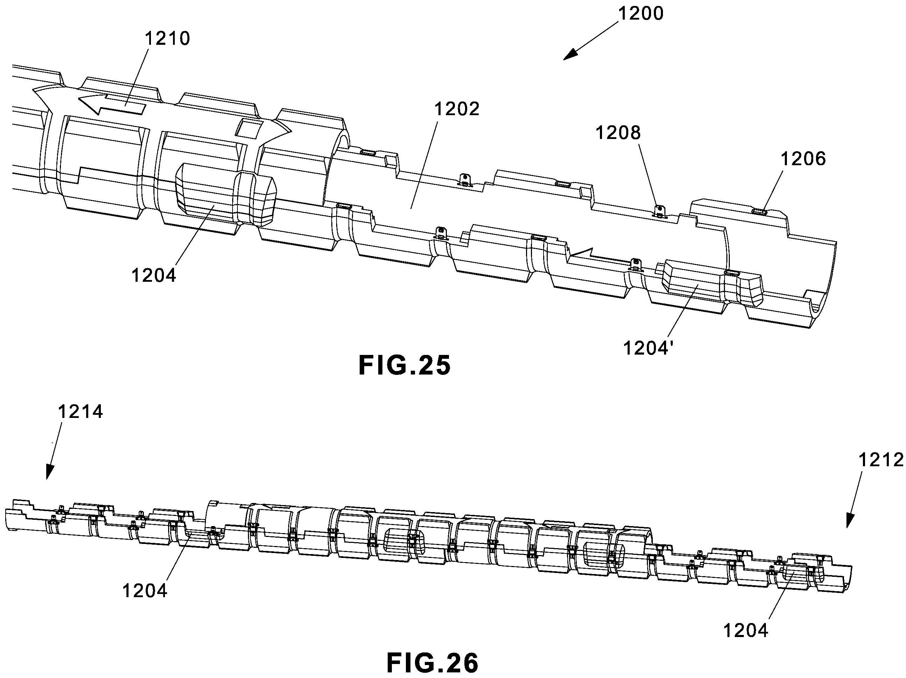

Referring to FIGS. 25-28, a sleeve system 1200 may include one or more (e.g., a plurality of, at least two, or at least four) reinforcing sections 1204 (e.g., ribs) that strengthen the sleeve according to an alternative seventh embodiment. In various embodiments, each half sleeve 1202 may include one or more (e.g., a plurality of, at least two, or at least four) strengthening sections 1204' (e.g., ribs). The strengthening sections 1204' (e.g., ribs) of a first half sleeve 1202 may cooperate with the strengthening sections 1204' (e.g., ribs) of a second half sleeve to form the one or more reinforcing sections 1204 of the sleeve. For example, each reinforcing section 1204 is formed from two strengthening sections 1204' of cooperating or adjacent half sleeves 1202. In one or more embodiments, the strengthening sections 1204' may form one or more of the trapezoidal protrusions. In various embodiments, the strengthening sections 1204' and/or trapezoidal protrusions may have first fasteners 1206 (e.g., female fasteners) and the corresponding trapezoidal openings may have second fasteners 1208 (e.g., male fasteners).

In addition to stabilizing mating between adjacent half sleeves 1202, the strengthening sections 1204' may also serve as a visual que to align the half sleeve 1202 for quicker assembly. In numerous embodiments, the male end 1214 of the half sleeve 1202 may be free of strengthening sections 1204' as they would inhibit mating between adjacent half sleeves 1202. In a refinement, strengthening sections 1204' may only be present proximate the female end 1212 and/or the midpoint 1216 of the half sleeve 1202.

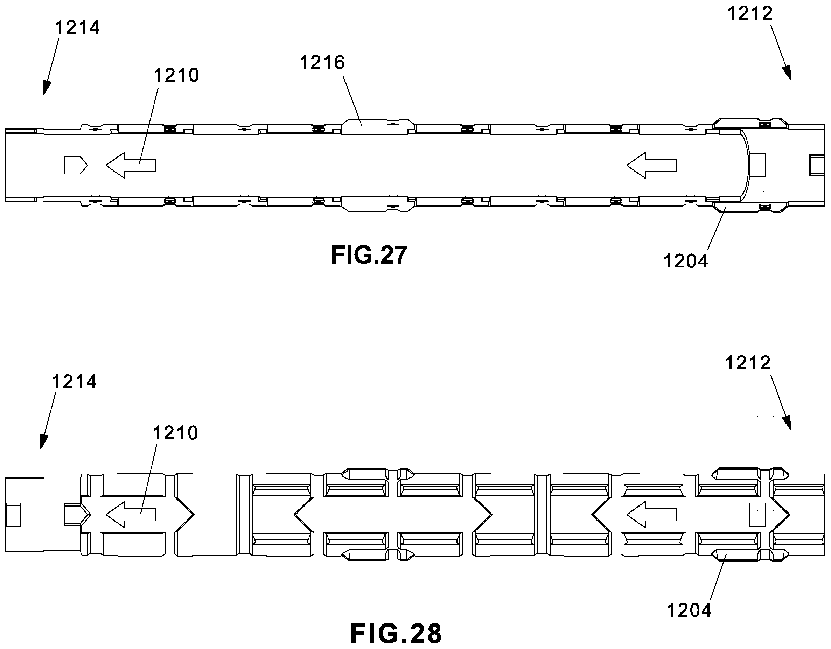

In a refinement, the half sleeves 1202 may also include additional visual ques 1210 such as arrows. In various embodiments, the additional visual ques 1210 may be disposed on an outer surface, as shown in FIGS. 25 and 28, and/or an inner surface as shown in FIGS. 27. For example, the arrows may be aligned to face the same direction during assembly.

Any of the fastening assemblies described herein may be embedded into any of the half sleeves described herein. The embodiments described are merely illustrative such that the fastening assemblies described herein are not specifically limited to the half sleeves described therewith.

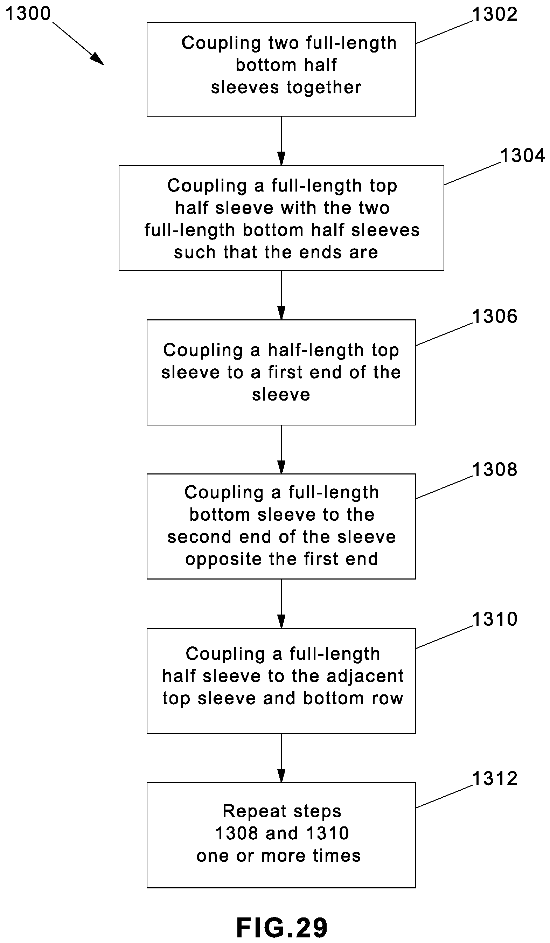

Referring to FIG. 29, a method 1300 of assembling a protective sleeve is provided. The method 1300 may include coupling two full-length bottom half sleeves together such as by mating the male end of a first half sleeve with the female end of a second half sleeve to form a bottom row (i.e., step 1302). The method 1300 may further include coupling a full-length top half sleeve with each of the two full-length bottom half sleeves such that the ends are staggered (i.e., step 1304). The method may also include coupling a top half-length half sleeve to one of the full-length bottom half sleeves (i.e., step 1306). In a refinement, the half-length half sleeve is positioned at the terminal end (e.g., the beginning) of the protective sleeve. The method may also include coupling a third full-length bottom half sleeve to the bottom row (i.e., step 1308) and a second full-length top sleeve to the top row and bottom row (i.e., step 1310). In various embodiments, steps 1308 and 1310 may be repeated one or more times, e.g., a plurality of times, at least 10 times, at least 25 times, or at least 100 times (i.e., step 1312).

These mating features of the cable protection systems described herein are utilized to provide an effective and efficient installation for assembling the half sleeves around a cable to be protected.

The present disclosure thus describes cable protection systems and methods for installing such cable protection systems as described above. As is readily apparent from the foregoing, various non-limiting embodiments of the systems, devices, and methods have been described. While various embodiments have been illustrated and described herein, they are exemplary only and it is not intended that these embodiments illustrate and describe all those possible. Instead, the words used herein are words of description rather than limitation, and it is understood that various changes may be made to these embodiments without departing from the scope of the following claims.

## Claims

1. A cable protection sleeve comprising:
a male end including a first mating feature configured to mate with a second mating feature on a female end of a first adjacent cable protection sleeve;
a female end including the second mating feature configured to mate with the first mating feature on a male end of a second adjacent cable protection sleeve; and
a main body positioned between the male end and the female end, the main body comprising:
a gear-shaped protrusion; and
a gear-shaped opening.

2. The cable protection sleeve of claim 1, wherein the first mating feature is a thru hole and the second mating feature is a hook.

3. The cable protection sleeve of any preceding claim, wherein the male end and the female end are provided in a dovetail shape for mating with each other.

4. The cable protection sleeve of any preceding claim, the female end further comprising:
a hook guidance chute.

5. The cable protection sleeve of any preceding claim, the male end further comprising:
a hook guidance chute.

6. The cable protection sleeve of any preceding claim, wherein the gear-shaped protrusion is configured in a trapezoidal shape, and the gear-shaped opening is configured in a trapezoidal shape.

7. The cable protection sleeve of any preceding claim, wherein the gear-shaped protrusion includes a first coupling fastener embedded, at least in part, within a portion of the gear-shaped protrusion; and
wherein the gear-shaped opening includes a second coupling fastener embedded, at least in part, within a portion of the gear-shaped opening.

8. The cable protection sleeve of claim 7, wherein the first coupling fastener is a female coupling fastener and the second coupling fastener is a male coupling fastener.

9. The cable protection sleeve of any of claims 7 to 8, wherein at least one of:
the embedded portion of the first coupling fastener includes a first anchor comprising at least one hole;
the embedded portion of the first coupling fastener includes a first anchor comprising at least one notch;
the embedded portion of the first coupling fastener includes a first anchor comprised in a 'T' shape; or
the embedded portion of the first coupling fastener includes a first anchor comprising a rectangular saw-tooth shape including at least one notch.

10. The cable protection sleeve of any of claims 7 to 9, wherein at least one of:
the first coupling fastener is a female coupling fastener further comprising a protective shield casing surrounding a coupling portion of the first coupling fastener;
the embedded portion of the first coupling fastener includes a first anchor comprising a plurality of barbed shapes; or
the first or second coupling fasteners include a spring for coupling, and the first or second coupling fasteners include a latch for retaining the first coupling fastener to the second coupling fastener.

11. A cable protection sleeve comprising:
a first half sleeve having teeth defining voids therebetween and a plurality of embedded fasteners, the plurality of embedded fasteners configured to couple with fasteners of a second half sleeve such that during coupling the teeth and voids of each half sleeve mate to form a protective sleeve; and
wherein the first half sleeve includes a first plurality of reinforcing structures configured to be mated with a second plurality of reinforcing structures of the second half sleeve such that when the first and second half sleeves are coupled together ends of the half sleeves are staggered.

12. The cable protection sleeve of claim **11,** wherein at least one of:
the plurality of embedded fasteners includes a first set of female fasteners embedded in the teeth or voids and a second set of male fasteners embedded in the other of the teeth or the voids; or
the first half sleeve includes a male end and a female end, the male end configured to mate with an adjacent female end and the female end configured to mate with an adjacent male end.

13. A method of assembling a cable protection sleeve, the method comprising:
coupling a female end of a first bottom protective half sleeve with a male end of a second bottom protective half sleeve; and
coupling a first top protective half sleeve to the first and second bottom protective half sleeves, wherein the first top protective half sleeve is offset such that ends of the top protective half sleeve do not align with ends of the first or second bottom protective half sleeves.

14. The method of claim 13, further comprising coupling a second top protective half sleeve having a length that is less than the first top protective half sleeve.

15. Use of the cable protection sleeve of any of claims 1 to 12 in a subsea application, optionally in protecting cables in the subsea application.
